# EUROPEAN PATENT APPLICATION

(11) **EP 4 800 430 A1**
(43) Date of publication of application: **02.09.2026**
(21) Application number: 25160551.5
(22) Date of filing: 27.02.2025
(51) Int. Cl.: G01S 7/40, G01S 7/41, G01S 13/42, G01S 13/89

(54) **SYNTHESIZED OBJECTS IN RADAR DATA FOR TRAINING OR VALIDATING OF MACHINE-LEARNING MODEL**

(71) Applicant: Infineon Technologies AG, 85579 Neubiberg (DE)
(72) Inventor: GOLAGHA, Mojdeh, 81249 München (DE); SATHYANIRANJAN, Anusha Sanmathi, 81927 München (DE)
(74) Representative: Kraus & Lederer PartGmbB

(57) **Abstract**

Techniques for populating a dataset for training or validating a machine-learning model are disclosed. One or more measurement samples (811, 812) are obtained, each of the one or more measurement samples comprising respective radar data (120, 140, 420) observing a respective scene (170, 171) comprising one or more respective objects (181, 182). A reflection signal component of a selected object from the respective radar data and synthesized radar data (821) is then generated based on a combination of the this reflection signal component acting as a template and at least a part of the radar data of the one or more measurement samples. Thereby, the radar data (821) emulates an observation of a synthesized scene (172) comprising at least the synthesized object (183). A synthesized sample comprising the synthesized radar data is then added to the dataset.

## Description

### TECHNICAL FIELD

Various examples of the disclosure generally relate to a machine-learning model processing radar data. Various examples of the disclosure specifically relate to populating a dataset for training or validating such machine-learning model. Various examples of the disclosure specifically relate to generating synthesized samples including synthesized radar data for the dataset for training or validating such machine learning model.

### BACKGROUND

Radar sensors are used in various use cases and application scenarios. An example use case includes human-presence detection for detecting humans. For instance, if a human is detected, appliances may be switched on or may be switched off. An alarm may be triggered. Perimeter security may be established. Further use cases include tracking of movable objects or classification of objects based on radar data.

Radar data may be processed using machine-learning (ML) models. ML models may be trained to provide certain estimations. The estimation can solve a certain regression or classification task. An example of a classification task is a human-presence detection.

It has been observed that the quality of the ML model sometimes varies, e.g., depending on the particular estimation task or the deployment scenario. Sometimes, wrong estimations - e.g., wrong classifications - are observed. The accuracy of the estimation is poor.

### SUMMARY

Accordingly, a need exists for ML models providing improved accuracy in the estimation based on radar measurement data.

This need is met by the features of the independent claims. The features of the dependent claims define embodiments.

A computer-implemented method of populating a dataset for training or validating a machine-learning model is disclosed. The method includes obtaining one or more measurement samples. Each of the one or more measurement samples includes respective radar data that observes a respective scene including one or more respective objects. The method also includes extracting a reflection signal component of a selected object from the respective radar data as a template reflection signal for a synthesized object. The method further includes generating synthesized radar data based on a combination of the template reflection signal and at least a part of the radar data of the one or more measurement samples. The synthesized radar data thereby emulates an observation of a synthesized scene that includes at least the synthesized object. Further, the method includes adding a synthesized sample that includes the synthesized radar data to the dataset.

A processing device includes a processor and a memory. The processor is configured to load program code from the memory and to execute the program code. The processor, upon executing the program code, is configured to obtain one or more measurement samples. Each of the one or more measurement samples includes respective radar data. The respective radar data observes a respective scene that includes one or more respective objects. The processor, upon executing the program code, is further configured to extract a reflection signal component of the selected object from the respective radar data as a template reflection signal for a synthesized object and to generate synthesized radar data based on a combination of the template reflection signal and at least a part of the radar data of the one or more measurement samples. The synthesized radar data thereby emulates an observation of a synthesized scene that includes at least the synthesized object. The processor, upon executing the program code, is further configured to add a synthesized sample that includes the synthesized radar data to the dataset. The data set is for training or validating a machine-learning model.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 is a flowchart of an example method.
FIG. 2 illustrates a synthesized scene observed by synthesized radar data, the synthesized scene including a synthesized object according to various examples.
FIG. 3 illustrates a scene observed by radar data according to various examples.
FIG. 4 illustrates a scene observed by radar data according to various examples.
FIG. 5 schematically illustrates radar data for the scene according to FIG. 3.
FIG. 6 schematically illustrates extraction of a reflection signal component from the radar data of FIG. 5 and further illustrates alteration of an associated template reflection signal according to various examples.
FIG. 7 schematically illustrates radar data for the scene according to FIG. 4.
FIG. 8 schematically illustrates synthesized radar data obtained from a combination of the radar data of FIG. 7 with the altar template reflection signal of FIG. 6.
FIG. 9 illustrates alteration of a template reflection signal according to various examples.
FIG. 10 illustrates alteration of the template reflection signal according to various examples.
FIG. 11 illustrates extraction of a reflection signal component based on ground-truth data of a measurement sample as well as further based on an analysis of a signal level of the radar data according to various examples.
FIG. 12 is a flowchart of a method according to various examples.
FIG. 13 schematically illustrates a processing device according to various examples.

### DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), a tensor processing unit (TPU), integrated circuits such as application-specific integrated circuits or field-programmable gate array (FPGA) circuitrs, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of processing radar data using a machine-learning (ML) model are disclosed. Various use cases and applications can be benefit from the disclosed techniques. For instance, an ML model may be used for solving a classification task or a regression task. For instance, an ML model may be used for providing gesture class estimations, people counting estimations, vital sign monitoring estimations, to give just a few examples. Further examples include tracking objects moving through a scene and human-presence detection. Yet further examples include location of objects of a certain type in the scene. For instance, humans may be located in a scene.

Various techniques disclosed herein employ a radar measurement of a scene including an object to acquire radar data. The radar data can then be input to an ML model to provide a respective estimation associated with the task at hand. For instance, based on radar data observing a scene depicting one or more objects, it may be determined whether at least one of the objects is a human. A corresponding output from the ML model may be "true" if human presence is detected or may be "false" if human presence is not detected. For a localization task, position information for the detective human may be output, e.g., the range position and/or angular position of the human.

The techniques disclosed herein primarily relate to the processing of radar data. The particular type of radar measurement employed to acquire radar data prior to such processing is not germane for the techniques disclosed herein. The techniques disclosed herein can be flexibly combined with different types of radar measurements. For instance, a short-range radar measurement could be implemented. Here, radar chirps can be used to measure a position of one or more objects in a scene having extents of tens of centimeters or meters. According to the various examples disclosed herein, a millimeter-wave radar sensor may be used to perform the radar measurement; the radar sensor operates as a frequency-modulated continuous-wave radar that includes a millimeter-wave radar sensor circuit, one or more transmitters, and one or more receivers. A millimeter-wave radar sensor may transmit and receive signals in the 20 GHz to 122 GHz range. Alternatively, frequencies outside of this range, such as frequencies between 1 GHz and 20 GHz, or frequencies between 122 GHz and 300 GHz, may also be used. As a general rule, a radar sensor can transmit a plurality of radar pulses, such as chirps, towards a scene. This refers to a pulsed operation. In some embodiments the chirps are linear chirps, i.e., the instantaneous frequency of the chirps varies linearly with time. A Doppler frequency shift can be used to determine a velocity of the object.

Typically, raw radar data is constituted by a sequence of data frames. A data frame may be structured into fast-time dimension, slow-time dimension and antenna channels. The data frame includes data samples over a certain sampling time for multiple radar pulses, specifically chirps. Slow time is incremented from chirp-to-chirp; fast time is incremented for subsequent samples. For instance, a 2-D Fast Fourier Transformation (FFT) of a data frame along fast-time and slow-time dimension yields a range-Doppler image (RDI). The RDI is an example of radar data that is obtained from pre-processing raw radar data. For instance, the RDI may be input to an ML model. Typically, ML models are not processing raw radar data but rather pre-processed radar data such as an RDI. Accordingly, various techniques disclosed herein rely on such pre-process radar data, e.g., binned data resolving a signal level along the range dimension, azimuthal position, and/or elevation position. Also, Doppler information can be resolved. The disclosed techniques can be flexibly applied to different representations and structures of the radar data. The particular pre-processing applied to arrive at such specific type of radar data is not germane for the techniques disclosed herein and the disclosed techniques can be flexibly combined with various pre-processing techniques known in the art.

The radar data generally may include a superposition of reflection signal components of multiple objects and background of the scene. Thus, signatures of multiple objects as well as background may be included in the radar data. The radar data may also include noise or clutter. Thus, the radar data includes entangled information for multiple objects, background, noise etc. By means of appropriate pre-processing it is possible to disentangle the radar measurement data to obtain information for individual ones of the multiple objects. For instance, at least a part of the RDI can be calculated and then a specific range bin or a set of range bins can be selected. This set of range bins carries the reflection signal component of an individual object.

According to the various examples, various kinds and types of ML models may be employed. An example implementation of the ML model is an artificial deep neural network (NN). An NN generally includes a plurality of nodes that can be arranged in multiple layers. Nodes of given layer are connected with one or more nodes of a subsequent layer. Skip connections between non-adjacent layers are also possible. Generally, connections are also referred to as edges. The output of each node can be computed based on the values of each one of the one or more nodes connected to the input. Nonlinear calculations are possible. Different layers can perform different transformations such as, e.g., pooling, max-pooling, weighted or unweighted summing, non-linear activation, convolution, etc. The NN can include multiple hidden layers, arranged between an input layer and an output layer. There can be a spatial contraction and a spatial expansion implemented by one or more encoder branches and one or more decoder branches, respectively. I.e., the x-y-resolution of the input data and the output data may be decreased (increased) from layer to layer along the one or more encoder branches (decoder branches). The encoder branch provides a contraction of the input sample, and the decoder branch provides an expansion. The calculation performed by the nodes are set by respective weights associated with the nodes. The weights can be determined in a training of the NN. In the training, a numerical optimization can be used to set the weights. A loss function can be defined between an output of the NN in its current training can then minimize the loss function. For this, a gradient descent technique may be employed where weights are adjusted from back-to-front of the NN. Some example NN that can be used in accordance with the disclosed techniques are disclosed in: US2023068523 A; US2021325509 A; US2019302253 A; US2022404486 A. The particular type or architecture of the ML model is not germane for the techniques disclosed herein; the techniques disclosed herein can flexible handle various types and architectures of the ML model.

For enabling the training or validating of the ML model, a dataset is populated with respective samples. Each sample includes a respective input-output pair. The input corresponds to or at least defines the input to the ML model; the output corresponds to the ground-truth data that should be output by the ML model when inputting the respective input of that input-output pair to the ML model. Hereinafter, such dataset is simply referred to as training dataset; however, it should be borne in mind that such dataset can be equally used for validating a pre-trained ML model.

The training dataset includes measurement samples. Each measurement sample includes respective radar data (e.g., pre-processed radar data) that has been obtained from a radar measurement; the radar data observes a certain scene that includes one or more objects. Also, each measurement sample includes associated ground-truth data for each of the one or more objects. For instance, such ground-truth data may be indicative of a range position of each of the one or more objects, an angular position of each of the one or more objects, a velocity of each of the one or more objects, a type of each of the one or more objects, a radar cross-section of each of the one or more objects, to give just a few examples. The amount of context information available for each object in the form of the ground-truth data may vary from training dataset to training dataset.

Generally, such measurement samples may be obtained from radar measurements, e.g., as part of a measurement campaign. Lab measurements or field measurements may be used to populate the training dataset. Ground-truth data can be obtained from manual annotation and/or alternative sensor modalities available in the lab or field measurement campaigns.

Various techniques are based on the finding that larger training datasets, i.e., including a greater number of samples, can help to increase the accuracy of the ML model. Various techniques are further based on the finding that executing measurement campaigns for populating a training dataset is tedious and time-consuming. Further, with the presence of noisy or faulty signals, e.g., multipath reflections, it is difficult to train machine learning models to learn the specific scenarios unless sufficient samples capturing such situations are present in the training dataset. For instance, an ML model may be initially trained using a dataset obtained from a specific type of radar sensor operating in a particular environment, such as a short-range radar measurement campaign conducted indoors. However, when the same ML model is deployed in a different setting, for example outdoors or with a different type of radar sensor, its performance may degrade due to differences between the training and testing conditions (domain shift). Domain shift refers to the mismatch between the conditions under which training data is collected and the real-world environments where the model is deployed. This discrepancy can stem from differences in sensor hardware configurations, environmental conditions such as temperature or humidity, or variations in how radar measurements are captured. For instance, an ML model trained on data gathered in controlled laboratory settings may encounter degraded performance when applied to field scenarios with different noise levels or object arrangements. To mitigate this challenge, generating synthesized samples that emulate diverse deployment environments can help populate the training dataset. This approach allows the ML model to better generalize across varying conditions, thereby improving its accuracy and reliability in real-world applications.

Accordingly, hereinafter, techniques are disclosed that facilitate populating datasets for training or validating a machine learning model. The techniques disclosed herein enable including synthesized samples - i.e., samples that are artificially created - that emulate an observation of a certain synthesized scene in the training/validation dataset. Domain shifts can be avoided by pre-emptively training the ML model across all relevant domains.

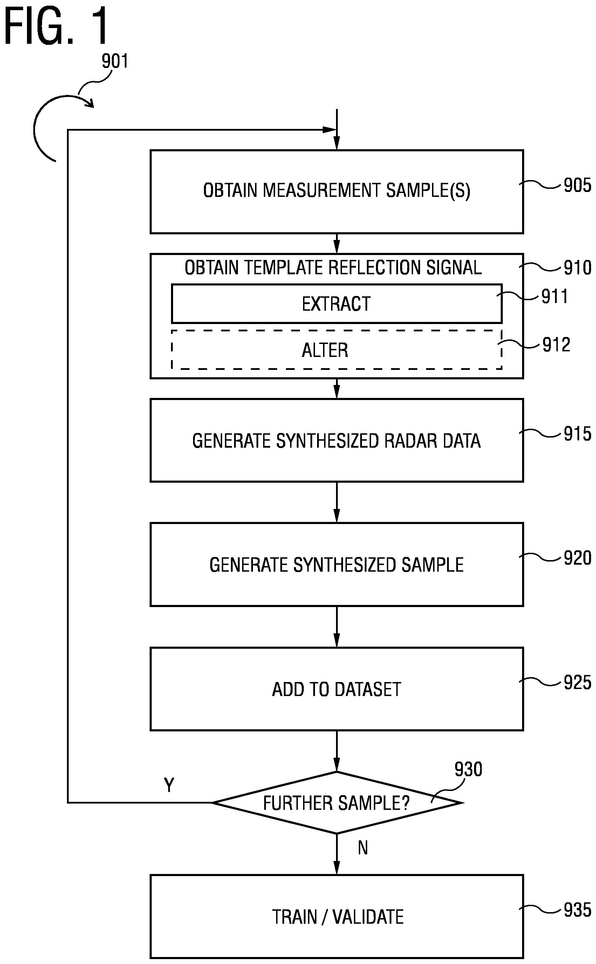

FIG. 1 is a flowchart of a method according to various examples. The method of FIG. 1 may be executed by a processor, e.g., upon loading program code that is stored in a memory. The method of FIG. 1 pertains to populating a training dataset for an ML model. The method of FIG. 1 broadly relates to generating synthesized samples for a training dataset based on measurement samples. The synthesized samples include synthesized radar data emulating an observation of a synthesized scene that includes one or more synthesized objects. The synthesized objects can have predetermined properties, e.g., be of a certain type, be arranged at a certain position in the scene, etc. These predetermined properties may be chosen by a user. They may have arbitrary values, according to a user's choice. Example types may be selected from one or more of the following: human, curtain, rotating fan, moving inanimate object; static inanimate object; living object; etc.

In the first iteration 901 of box 905, one or more measurement samples are obtained. Each of the one or more measurement samples includes respective radar data that observes a respective scene including one or more respective objects. For example, the one or more measurement samples that are obtained in box 905 may be obtained from a dataset that has been pre-populated based on one or more measurement campaigns.

The one or more measurement samples may be selected from all measurement samples available in the dataset in accordance with a query. The query may specify one or more desired properties of a synthesized object that is to be included in a synthesized scene. For instance, the query may specify that a synthesized scene including a certain synthesized object - e.g., a human - is to be constructed, wherein the human is to be arranged at a certain range position behind a curtain. Then, the query may be used to perform a lookup in the data set for measurement samples that include radar data that can potentially serve as a template for the synthesized radar data. To give an example, a lookup may be performed for a measurement sample that includes radar data that observes the scene in which a human is arranged. The reflection signal component of the human is included in that radar data may then be used as a template reflection signal for the synthesized human in the synthesized scene. For instance, the query may specify a certain target range position. Then the one or more measurement samples may be selected so that the actual range position of a respective object in the respective measurement sample is within a certain distance from that target range position. The one or measurement samples may be selected so that a distance between the actual range position of respective object and the target range position is as small as possible. Such range-dependent selection is based on the finding that the received signal strength varies with target distance due to propagation losses. So, by selecting one or more measurement samples based on the target range position, this range-dependent attenuation can be inherently considered, thereby better preserving the physical consistency and accuracy of synthesized samples.

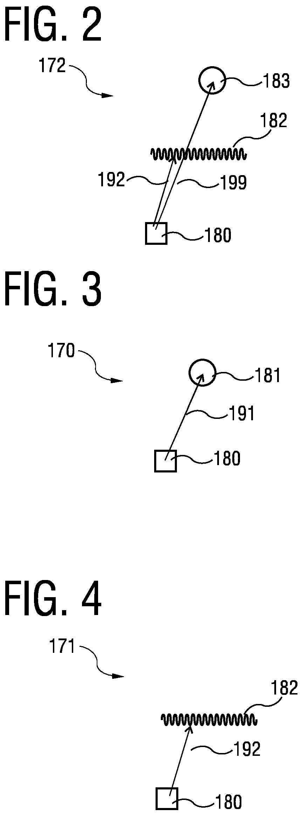

An example synthesized scene 172 based on which such query may be constructed is illustrated in FIG. 2: here, a synthesized object 183 - a human - is arranged behind a curtain object 182. The respective range positions 192, 199 of the curtain object 182 and the human 183 are illustrated. The range position 199 is at a larger distance to a radar sensor 180 if compared to the range position 192 of the curtain object 182. Various techniques disclosed herein are based on the finding that reflection signal components of humans on the one hand and moving inanimate objects such as curtains often include relatively similar features - so that discriminating between humans and moving inanimate objects is a challenging task for an ML model. To enable the ML model to nonetheless robustly discriminate between such objects of different types, hereinafter, techniques are disclosed that enable generation of tailored synthesized samples that include synthesized radar data emulating an observation of a synthesized scene that comprises at least a synthesized object. If a synthesized sample including synthesized radar data emulating the observation of the synthesized scene 172 is included in a training data set for the ML model, the ML model can be trained to robustly discriminate between humans and moving inanimate objects such as the curtain object 182 or, e.g., a ceiling-mounted rotating fan object. On the other hand, typical training datasets that are widely available may not include measurement samples for relatively complex scenes such as the synthesized scene 172. Accordingly, at box 905 in FIG. 1, one or more measurement samples that can serve as proxies based on which the synthesized sample is constructed may be obtained from the training dataset.

For example, a given measurement sample that may be obtained at box 905 includes radar data that observes the scene 170 as illustrated in FIG. 3: here, a radar sensor 180 is arranged relatively to an object 181, e.g., a human. The respective range position 191 is given by the distance between the radar sensor 180 and the human 181. For instance, the measurement sample including radar data observing the scene 170 in FIG. 2 may be selected responsive to a query that specifies the target object type to equate to "human". The query may specify a desired range position range that includes the particular range position 191 of the human 181. Another example measurement sample that may be obtained at box 905 includes radar data that observes the scene 171 is illustrated in FIG. 4: here, another object 182 - a curtain - is arranged at a certain range position 192 with respect to the radar sensor 180. As will be appreciated, based on the radar data observing the scene 171 as well as the radar data observing the scene 170, it is possible to construct synthesized radar data emulating observation of the synthesized scene 172 in FIG. 2. By performing a tailored retrieval of one or more measurement samples, specific measurement samples can be obtained that are good candidates for providing a template reflection signal for the synthesized object and its arrangement in the respective synthesized scene.

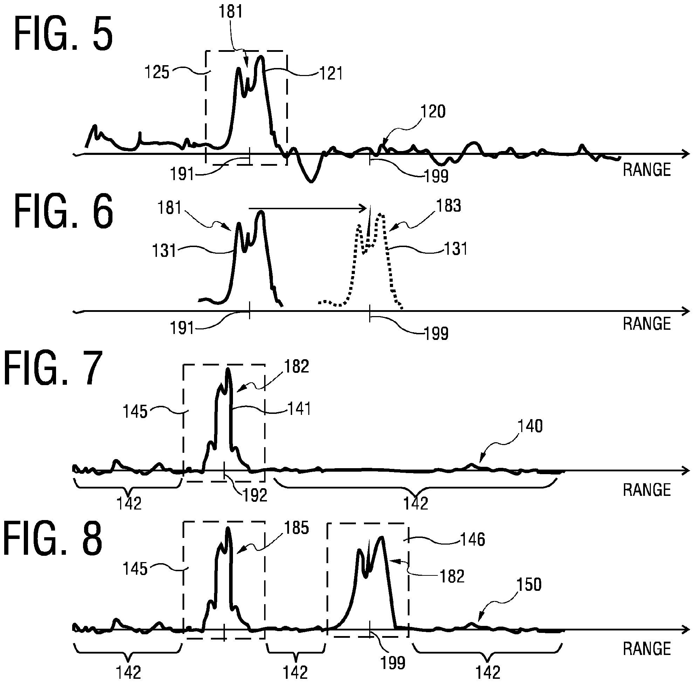

Now referring again to FIG. 1: at box 910, a template reflection signal associated with the desired radar signature of the synthesized object in the synthesized scene is obtained. Box 910, for this purpose, includes - at box 911 - extracting a reflection signal component of a selected object from the radar data of the one or more measurement samples obtained at box 905; this yields the template reflection signal. Box 910 may optionally include - at box 912 - altering that template reflection signal. An example of these processes is illustrated in FIG. 5 and FIG. 6. FIG. 5 illustrates radar data 120, here in the form of a signal amplitude as a function of range dimension.

Radar data, according to the various disclosed examples, can generally take various forms and is not limited to the illustrated example of the signal amplitude as a function of range dimension. For instance, radar data may be available in the form of RDIs, time-dependent data such as a range spectrum or Doppler spectrum. Radar data may provide angular resolution, e.g., 1-D or 2-D angular resolution for an azimuthal and/or elevation angle. Further, while in FIG. 5 and FIG. 6 the radar data is illustrated as a continuous signal, typically, the radar data is available in discretized form, e.g., according to range bins, Doppler bins, etc. Nonetheless, the simplified illustration of the radar data 120 as illustrated in FIG. 5 and the following FIGs. is helpful for explaining various concepts of the invention.

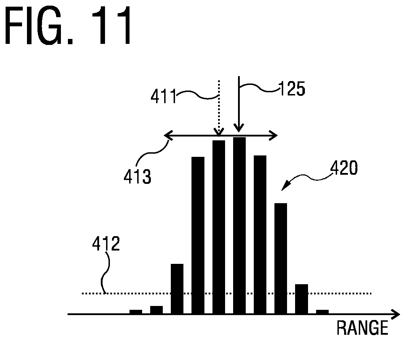

Specifically, FIG. 5 illustrates that the radar data 120 includes a reflection signal component 121 of a certain object: The radar data 120 may observe the scene 170 including the human 181 as illustrated in FIG. 3. The associated measurement sample not only includes the radar data 120, but also includes ground-truth data 125 for the human 181: the ground-truth data 125 locates the reflection signal component 121 of the human 181 within the radar data 120, e.g., against background and clutter. The reflection signal component 131 is extracted (cf. box 911) based on the ground-truth data 125. A start position and a stop position of the reflection signal component 131 may be determined based on the ground-truth data 125 (details with respect to such extraction process will be later on explained in connection with FIG. 11). The reflection signal component 131 of the human 181 serves as a template signature for the synthesized human 183 in the synthesized scene 172 to be emulated (cf. FIG. 2). It may thus be referred to as template reflection signal 131. FIG. 6 then illustrates the respective template reflection signal 131 that has been extracted from the radar data 120. FIG. 6 also illustrates that the template reflection signal 131 may be optionally altered (cf. FIG. 1: box 912). Specifically, the range position of the template reflection signal 131 is altered, to thereby obtain the predetermined range position 199 of the human 183 in the synthesized scene 172. This predetermined range position 199 may be indicated in the initial query that defines one or more properties of the synthesized scene.

Now referring again to FIG. 1: at box 915, based on the - optionally altered - template reflection signal obtained at box 910, synthesized radar data is generated. The synthesized radar data is determined based on a combination of the template reflection signal obtained in box 910 and at least a part of the radar data of the one or more measurement samples. The combination may be an algebraic addition. The synthesized radar data thereby emulates an observation of a synthesized scene that includes at least the synthesized object. This process is illustrated in connection with FIG. 7 and FIG. 8. Specifically, FIG. 7 illustrates further radar data 140 of another scene: in the scenario FIG. 7, the radar data 140 observes the scene 171 previously discussed in connection with FIG. 4. The radar data 140 includes a reflection signal component 141 (i.e., a radar signature) of the curtain object 182 as well as background 142. The associated measurement sample also includes ground-truth data 145 locating the reflection signal component 141 of the curtain object 182 in the radar data 140. In the illustrated scenario, the template reflection signal 131 - after alteration to obtain the predefined range position 199 for the human 183 - is combined with the radar data 140 - i.e., the reflection signal component 141 and the background 142 -, to yield synthesized radar data 150 as illustrated in FIG. 8.

Now referring again to FIG. 1: At box 920, the synthesized radar data is used to construct a synthesized sample which is then added to the training dataset, box 925. Generating the synthesized sample may include determining ground-truth data for the synthesized object and including the ground-truth data in the synthesized sample. To explain this, referring to FIG. 8: the ground-truth data 146 for the synthesized human 183 can be generated based on the ground-truth data 125 for the human 181 by altering the ground-truth data 125 in a similar manner as the alteration of the template reflection signal. In the scenario FIG. 8, this means that the ground-truth range position is set to the predetermined range position 199.

At box 930, it is determined whether a further iteration 901 of box 905 and following is required, i.e., it is determined whether a further synthesized sample is required for the dataset for training or validating the machine learning model. In the affirmative, a further iteration 901 of box 905 and following boxes is executed. Otherwise, the method commences at box 935.

At box 935 the machine learning model is trained or validated on the dataset that has been populated by one or more iterations 901 of box 925. The training of an ML model such as a NN involves optimizing its parameters to minimize the difference between predicted outputs and ground-truth data. This optimization process typically employs numerical methods that adjust the weights associated with connections between nodes in the NN. A key concept in this process is backpropagation, which refers to the method of calculating gradients of a loss function with respect to the model's weights. The loss function quantifies the discrepancy between the predicted outputs and the actual ground-truth data, providing a measure of how well the model performs on a given task. During training, an optimization algorithm adjusts the weights of the NN in an iterative manner. One widely used optimization technique is gradient descent, which updates the weights by moving them in the direction that reduces the loss function. The gradient of the loss function, computed via backpropagation, indicates the direction of steepest ascent, and the weights are adjusted in the opposite direction to minimize the loss. This process may be enhanced with additional techniques, such as learning rate scheduling or momentum, to improve convergence. The loss function serves as a mathematical formulation of the ML model's performance and is typically defined based on the specific task at hand. For example, for classification tasks like human presence detection, a binary cross-entropy loss function may be used to measure the difference between predicted probabilities and true labels. The selection of an appropriate loss function ensures that the optimization process aligns with the desired behavior of the model. By iteratively applying these techniques-calculating gradients via backpropagation, updating weights through gradient descent, and minimizing a well-defined loss function-the ML model can learn to accurately process radar data for tasks such as human presence detection or object localization.

As will be appreciated from the above, given the availability of several different types of objects - like human, curtain, fans, etc. - in the initial dataset and the provision to automate such a process of continuously generating synthesized samples from the same query, many synthesized samples can be created in a short amount of time by executing multiple iterations 901.

Various modifications to the method as explained above are conceivable and some of these possible modifications will be explained below.

For illustration, above, an example implementation has been disclosed in which a primary object is the human 181. The primary object serves as a template for the synthesized object, i.e., the synthesized human 183. The secondary object is the curtain object 182. Notably, the reflection signal components for the primary and secondary objects are included in multiple different measurement samples, i.e., are included in different radar data. The reflection signal component of the primary object is extracted from the radar data included in the primary measurement sample, to yield the template reflection signal. This template reflection signal is then altered, by shifting its range position back so that it appears behind the secondary object, i.e., at a position offset. Then, that altered template reflection signal is combined with the background signal of the radar data of the secondary measurement sample, the secondary measurement sample also including a reflection signal component of the secondary object, i.e., the curtain object. Various modifications to this process are conceivable. For instance, instead of using a single template reflection signal for a single synthesized object, multiple template reflection signals for multiple synthesized objects to be included in the synthesized scene may be used. For instance, two, three, or even more synthesized objects may be included in the synthesized scene. Furthermore, while in the example above multiple radar data included in multiple different measurement samples have been used, it is generally possible to use a single measurement sample and extract the reflection signal component of a given object from the radar data of that measurement sample; then, the associated template reflection signal may be optionally altered and combined with the background component of the same radar data of that measurement sample. The radar data of that single measurement sample may optionally include one or more further reflection signal components of one or more further objects. For instance, it may be possible that the radar data includes a first reflection signal component of a curtain object and includes a first reflection signal component of a human arranged in front of the curtain object. Then, that second reflection signal component may be extracted and altered so that the synthesized human thereby obtained is arranged behind the curtain. As will be appreciated, various modifications of the disclosed techniques with respect to the number of measurement samples to be considered, the number of synthesized objects, the origin of the background of the synthesized radar data, etc. are conceivable. Next, a further type modification will be explained.

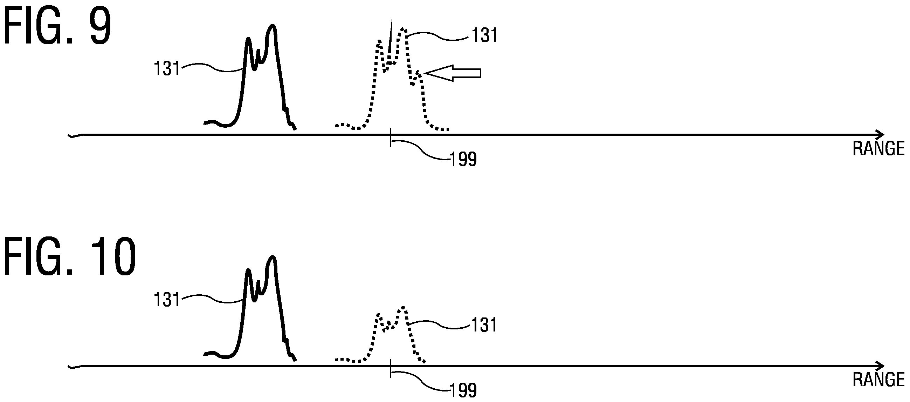

A further modification pertains to the type of signal alteration optionally applied at box 912. Above, a scenario has been in which the range position of the template reflection signal 131 is altered (cf. FIG. 6). Alternatively or additionally to altering the range position of the template reflection signal 131, one or more other properties of the template reflection signal may be altered to emulate respective predetermined properties of the synthesized object. Some examples are discussed next. For instance, in FIG. 9, the template reflection signal is altered not only to obtain a certain desired range position 199, but also to obtain an additional multi-path component (marked by the arrow in FIG. 9). Thereby, a predetermined radar cross-section of the synthesized object and/or a predetermined multi-path characteristics of the synthesized scene is obtained. In FIG. 10, the signal level of the template reflection signal 131 is altered, to thereby obtain a desired radar cross-section of the synthesized object. A certain propagation loss can be modeled. For instance, if a template reflection signal is associated with a certain range position and the synthesized object is to be placed further away from (closer to) the radar sensor, then additional (reduced) propagation loss can be modelled by reducing (increasing) the signal level. On the other hand, by selecting the one or more measurement datasets so that they include objects that are already close to the desired range position, then such impact of additional or reduced propagation loss can be small - in this case, such additional processing may not be required. Further options include modifying the angular position of the template reflection signal 131 or a Doppler position of the template reflection signal. Note that while in FIG. 9 the multi-path component of the template reflection signal 131 is altered in addition to the range position, the similarly possible that the range position is not altered well, still, the multipath component is altered. Similarly, in FIG. 10 the signal level may be altered without altering the range position. As will be appreciated from the above, various options are available for altering the template reflection signal. Such framework can also be extended to use with synthesized 'faulty' samples, like multi-path / 'ghost' reflections of non-human targets that originally might have led to false positive predictions of human presence. For this, the synthesized object may be of a type 'curtain reflection', 'human reflection', etc. to generate synthesized radar data which contains an arbitrary object with noisy additions like reflections.

FIG. 11 illustrates aspects in connection with box 910 of FIG. 1, i.e., aspects in connection with extracting the reflection signal component associated with a certain object from the radar data. As will be appreciated, FIG. 11 illustrates concepts of cropping radar data to obtain a reflection signal component information of an object. I.e., the reflection signal component constitutes the radar signature of the object; and is separated from background and/or reflection signal components of other objects.

FIG. 11 illustrates radar data 420 in binned format, i.e., multiple range bins each indicate a certain signal level. Also illustrated in FIG. 11 is ground-truth data 125 for a respective object included in the measurement sample. In the scenario FIG. 11 the ground-truth data 125 identifies a single one of the range bins. For instance, the ground-truth data 125 may identify the particular range bin having a maximum signal level. Depending on the particular structure of the measurement sample, the ground-truth data may carry other information. For instance, the ground-truth data may not only identify a particular range bin but may alternatively indicate a collection of range bins associated with the object.

Irrespective of the particular format and/or information content of the ground-truth data 125, it has been observed that sometimes the ground-truth data 125 may have insufficient quality. For instance, if the ground-truth data 125 is obtained from a manual annotation process, the annotator may have located a particular object at insufficient accuracy. Such insufficient quality of the ground-truth data 125 has the potential to result in a reduced quality of the synthesized radar data: specifically, since the template reflection signal for the synthesized object is based on the extracted reflection signal component, if the reflection signal component is wrongly extracted from the radar data also the template reflection signal of the synthesized object may be corrupted. Thus, according to various examples, the reflection signal component is not only extracted based on the ground-truth data but also extracted based on an analysis of a signal level of the respective radar data. some examples of such analysis of the signal level of the respective radar data are illustrated in connection with FIG. 11. For instance, the signal levels in the range bins adjacent to the particular range bin indicated by the ground-truth data 125 may be analyzed and a predefined distribution may be fitted; a center position 411 of such distribution may then be used as a center position of the reflection signal component of the object. For instance, all bins within a predefined range 413 centered at that center position 411 may be considered to belong to the radar signature of the object. In another scenario, a certain dynamic threshold 412 may be determined based on the signal level indicated by the ground-truth data 125. For example, the dynamic threshold 412 may have a certain predefined threshold of that signal level in the range bin indicated by the ground-truth data 125. Then, all range bins having a signal level at or above the dynamic threshold 412 may be considered to belong to the object.

These are only some examples of how the ground-truth data 125 may be processed along with an analysis of the radar data to reliably extract the reflection signal component of the object. Along with varying information content of the radar data and the ground-truth data, other options for extracting the reflection signal component are conceivable.

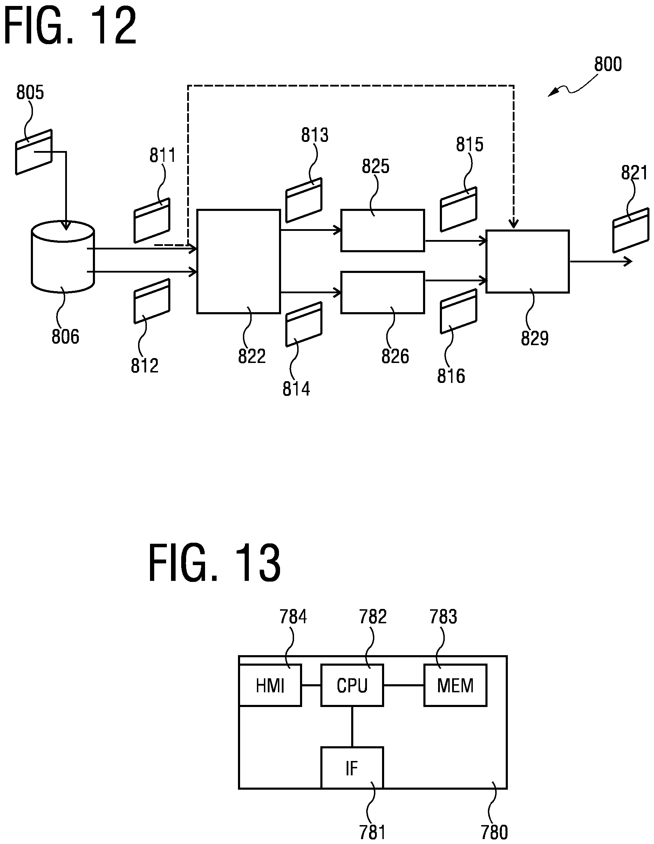

FIG. 12 schematically illustrates an example processing pipeline 800 for generating synthesized radar data 821. The synthesized radar data 821 is artificially created (i.e., synthesized) but yet mimics radar data that could be naturally occurring if a corresponding scene was actually observed using a radar sensor in a radar measurement. For example, the processing pipeline 800 is illustrated in FIG. 12 may implement the method of FIG. 1.

FIG. 12 illustrates a predefined measurement dataset 806 that includes multiple measurement samples that have been obtained, e.g., through a measurement campaign. Each measurement sample included in the measurement dataset 806 includes associated radar data and ground-truth data. The measurement dataset 806 contains radar data that has been measured using radar sensors, as well as ground-truth metadata i.e., contextual information of the recording circumstances, like targets in the scene: human, curtain, etc.; target location: distance from the radar (range), angle from the center.

The measurement dataset 806 is accessed based on a query 805 to retrieve two measurement samples 811, 812 (cf. FIG. 1: box 905). For instance, such query 805 may specify a certain type of object or multiple types of objects that should be included in a synthesized scene. A lookup can be performed for 4 measurement samples that observe scenes that include such objects, so that these objects may serve as templates. The query 805 may specify one or properties of such objects, e.g., their range position, their azimuthal position, their elevation position, and/or their velocity, etc., to give just a few examples.

The query 805 may be user-generated. The query 805 may be generated in an automated manner, e.g., in accordance with a predefined script that describes a variability of desired synthesized samples.

The measurement samples 811, 812 are then fed to a pre-processing module 822 configured to extract, from the radar data of each of the measurement samples 811, 812, a respective reflection signal component of the respective object (cf. box 911 of FIG. 1). This is based on the ground-truth data locating the reflection signal component in the respective radar data. Furthermore, an analysis of the radar data or specifically its signal level may also be employed (respective techniques have been previously explained in connection with FIG. 11).

If the radar data stored in the measurement data set 806 raw - i.e., raw radar data as received by the radar sensor - prior to such extraction, the raw radar data may be pre-processed by the pre-processing module 822. For example, the raw radar data may be converted into a spectrogram or doppler-image that uses the range information to detect, track or identify targets. For instance, the raw radar data may be converted into an RDI and the reflection signal component of a given object may then be extracted from the Doppler spectrogram of a certain range bin of the RDI.

The pre-processing module 822 then outputs the template reflection signals 813, 814 for two respective synthesized objects. Two template reflection signals 813, 814 may be labeled as primary and secondary recording for the purpose of creating synthesized radar data in which the target from the secondary recording is to be placed in front of / behind target from the primary recording.

These template reflection signals 813, 814 are altered (cf. FIG. 1: box 912) in respective modification modules 825, 826. This yields altered template reflection signals 815, 816. For instance, as previously explained in connection with FIG. 6, the range position of the respective template reflection signal 813, 814 may be altered so as to emulate a predetermined position of the synthesized object in the desired synthesized scene. A certain desired predetermined range of such may be obtained.

Alternatively or additionally, multipath components of the template reflection signals may be altered, a signal level of the template reflection signal may be altered, and/or an angular position of the template reflection signal may be altered. Other options for altering the template reflection signals also include non-object specific modification such as noise injection.

While FIG. 12 illustrates an example in which, both, the template reflection signal 813 is altered by the modification module 825 as well as the template reflection signal 814 is altered by the modification module 826, as a general rule, it may be possible that only a single template reflection signal is altered.

The altered template reflection signals 815, 816 are then algebraically added in a combination module 829 (cf. FIG. 1: box 915). Furthermore, they may be additionally combined with background, e.g., extracted from the initial radar data included in the measurement sample 811 (illustrated by the dotted arrow in FIG. 12). The output is synthesized radar data 821. The thus obtained values may be optionally clipped or normalized.

The synthesized radar data 821 may be combined with synthesized ground-truth data, to form a respective synthesized sample (cf. FIG. 1: box 920). The synthesized ground-truth data can be based on the ground-truth data included in the measurement samples 811, 812, wherein respective properties indicated by the ground-truth data included in the measurement samples 811, 812 may be altered in accordance with the alteration of the associated template reflection signals in module 829.

FIG. 13 schematically illustrates a processing device 780. The processing device 780 includes a communication interface 781. For instance, radar data - e.g., raw radar data or pre-process radar data, e.g., in the form of RDIs, angular spectra, Doppler spectra, etc. - can be received via the communication interface 781, e.g., from a respective database storing a training dataset. The processing device 780 also includes a processor 782 as well as a memory 783. The processing device also includes a human-machine interface 784. The processor 782 may load program code from the memory 783 and execute the program code. The processor 782, upon loading and executing the program code, may perform techniques as disclosed herein, e.g., in connection with FIG. 1. The processor 782, upon loading and executing the program code, may execute one or more of the following steps: obtaining a user query via the human-machine interface 784; performing a lookup in a training data set that is stored in a repository, e.g., based on the query and/or by communicating via the communication interface 781 with the repository; extracting reflection signal components as characteristic signatures of certain types of objects from radar data; altering template reflection signals, e.g., by offsetting in range domain, Doppler domain, angular domain, etc.; Altering or generating ground-truth data for a synthesized objects; generating a synthesized sample including a synthesized radar data as well as associated ground-truth data for one more objects, in particular synthesized objects, included in a synthesized scene for which observation is emulated by the associated synthesized radar data included in the synthesized sample; training an ML model based on one or more synthesized samples; validating an ML model based on one or more synthesized samples; deploying an ML model that has been trained and/or validated based on one more synthesized samples; inferring an ML model that has been trained and/or validated based on one or more synthesized samples; controlling a technical apparatus based on an estimation provided by an ML model that has been trained and/or validated based on one more synthesized samples; executing human-presence detection and/or human presence location in a scene based on inferring an ML model; etc.

Summarizing, techniques have been disclosed that generally relate to processing radar data using ML models. The methods described facilitate the training or validation of ML models by generating synthesized samples that emulate various scenarios, including complex scenes with multiple objects such as humans and moving inanimate objects like curtains. These synthesized samples are created by extracting reflection signal components from measured radar data and optionally altering their properties, such as range position, signal level, or angular position, to generate tailored training examples. The synthesized radar data is combined with ground-truth information to form new samples for the dataset.

The techniques aim to improve ML model robustness by addressing challenges like domain shift, where discrepancies exist between training conditions and real-world deployment environments. For instance, synthesized scenes may simulate humans located behind objects or in different environmental settings, helping the ML model better generalize across diverse scenarios. The methods are flexible and can be applied to various types of radar measurements and ML architectures.

By automating the creation of diverse and realistic training data, these techniques enhance the accuracy and reliability of ML models used for tasks such as human presence detection, object localization, and gesture recognition.

Further summarizing, at least the following EXAMPLES have been disclosed.

### EXAMPLES

EXAMPLE 1.A computer-implemented method of populating a dataset for training or validating a machine-learning model,
wherein the method comprises:
- obtaining one or more measurement samples (811, 812), each of the one or more measurement samples comprising respective radar data (120, 140, 420) observing a respective scene (170, 171) comprising one or more respective objects (181, 182),
- extracting, as a template reflection signal (131, 813, 814) for a synthesized object (183), a reflection signal component of a selected object from the respective radar data,
- generating synthesized radar data (821) based on a combination of the template reflection signal and at least a part of the radar data of the one or more measurement samples, the synthesized radar data (821) thereby emulating an observation of a synthesized scene (172) comprising at least the synthesized object (183), and
   - adding a synthesized sample comprising the synthesized radar data to the dataset.

EXAMPLE 2.The computer-implemented method of EXAMPLE 1, wherein the method further comprises:
- altering the template reflection signal to generate the synthesized radar data so as to emulate a predetermined property for the synthesized object.

EXAMPLE 3.The computer-implemented method of EXAMPLE 2,
wherein a range position (191, 192) of the template reflection signal is altered, to thereby obtain a predetermined position of the synthesized object in the synthesized scene.

EXAMPLE 4.The computer-implemented method of EXAMPLE 2 or 3,
wherein one or more multipath components of the template reflection signal are altered, to thereby obtain at least one of a predetermined radar cross-section of the synthesized object or predetermined multipath characteristics of the synthesized scene.

EXAMPLE 5.The computer-implemented method of any one of EXAMPLEs 2 to 4,
wherein a signal level of the template reflection signal is altered, to thereby obtain a desired radar cross-section of the synthesized object.

EXAMPLE 6.The computer-implemented method of any one of EXAMPLEs 2 to 5,
wherein an angular position of the template reflection signal is altered, to thereby obtain a predetermined position of the synthesized object in the synthesized scene.

EXAMPLE 7.The computer-implemented method of any one of EXAMPLEs 2 to 6,
wherein the one or more measurement samples comprise ground-truth data for the selected object,
wherein the method further comprises:
   - determining ground-truth data for the synthesized object based on altering the ground-truth data for the selected object in accordance with said emulating of the predetermined property.

EXAMPLE 8.The computer-implemented method of any one of EXAMPLEs 2 to 7,
wherein the reflection signal component is extracted based on ground-truth data for the selected object included in the one or more measurement samples and further based on an analysis of a signal level of the respective radar data.

EXAMPLE 9.The computer-implemented method of any one of the preceding EXAMPLEs,
wherein the synthesized scene comprises the synthesized object and a further object included in the one or more scenes of the one or more measurement samples.

EXAMPLE 10. The computer-implemented method of EXAMPLE 9,
wherein a position of the synthesized object in the synthesized scene is offset from a position of the further object.

EXAMPLE 11. The computer-implemented method of any one of EXAMPLEs 1 to 10,
wherein the one or more measurement samples comprise a first measurement sample and a second measurement sample,
wherein the reflection signal component of the selected object is extracted from the radar data of the first measurement sample,
wherein the radar data of the second measurement sample observes a scene comprising a further object,
wherein the synthesized radar data is generated based on the combination of the template reflection signal and at least a part of the radar data of the second measurement sample, the synthesized scene thereby comprising the synthesized object and the further object.

EXAMPLE 12. The computer-implemented method of any one of EXAMPLEs 1 to 10,
wherein the one or more measurement samples comprise a single measurement sample,
wherein the scene of the radar data of the single measurement sample comprises the selected object and a further object,
wherein the synthesized radar data is generated based on the combination of the template reflection signal and at least a part of the radar data of the single measurement sample, the synthesized scene thereby comprising the synthesized object and the further object.

EXAMPLE 13. The computer-implemented method of EXAMPLE 11 or 12, wherein the method further comprises:
- altering a range position of the template reflection signal, so that the synthesized object is arranged in front of or behind the further object in the synthesized scene.

EXAMPLE 14. The computer-implemented method of EXAMPLE 13,
wherein the range position of the template reflection signal is altered based on a predetermined range offset between the synthesized object and the further object.

EXAMPLE 15. The computer-implemented method of any one of EXAMPLEs 9 to 14,
wherein the synthesized object is of a first type,
wherein the further object is of a second type.

EXAMPLE 16. The computer-implemented method of EXAMPLE 15,
wherein the first type is human and the second type is moving inanimate object, or vice versa.

EXAMPLE 17. The computer-implemented method of any one of the preceding EXAMPLEs,
wherein the reflection signal component is extracted from a Doppler spectrogram of a range bin of a range Doppler image of the respective radar data,
wherein the template reflection signal comprises a Doppler spectrogram,
wherein the combination algebraically adds values of the Doppler spectrogram of the template reflection signal to another Doppler spectrogram of a range bin of a range Doppler image.

EXAMPLE 18. The computer-implemented method of any one of the preceding EXAMPLEs, further comprising:
- training or validating the machine-learning model based on the dataset.

EXAMPLE 19. A processing device (780), comprising a processor (782) and a memory (783), the processor being configured to load program code from the memory and to execute the program code, wherein the processor, upon executing the program code, is configured to:
- obtain one or more measurement samples, each of the one or more measurement samples comprising respective radar data observing a respective scene comprising one or more respective objects,
- extract, as a template reflection signal for a synthesized object, a reflection signal component of a selected object from the respective radar data,
- generate synthesized radar data based on a combination of the template reflection signal and at least a part of the radar data of the one or more measurement samples, the synthesized radar data thereby emulating an observation of a synthesized scene comprising at least the synthesized object, and
- add a synthesized sample comprising the synthesized radar data to a dataset for training or validating a machine-learning model.

EXAMPLE 20. The processing device of EXAMPLE 19, wherein the processor, upon executing the program code, is configured to perform the method of any one of EXAMPLEs 1 to 18.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various examples have been disclosed above in connection with a dataset including one or more synthesized samples is used for training and ML model. Similar techniques may be readily applied to techniques in which such dataset is used for validating an ML model.

**REFERENCE NUMERALS**

| | |
|---|---|
| radar data | 120 |
| reflection signal component | 121 |
| ground - truth data | 125 |
| template reflection signal | 131 |
| reflection signal component | |
| radar data | 140 |
| reflection signal component | 141 |
| background | 142 |
| ground - truth data | 145 |
| ground - truth data | 146 |
| scene | 170 |
| scene | 171 |
| synthesized scene | 172 |
| radar sensor | 180 |
| human object | 181 |
| curtain object | 182 |
| synthesized human object | 183 |
| range position | 191 |
| range position | 192 |
| range position | 199 |
| center position | 411 |
| dynamic threshold | 412 |
| range | 413 |
| radar data | 420 |
| processing device | 780 |
| communication interface | 781 |
| processor | 782 |
| memory | 783 |
| human - machine interface | 784 |
| processing pipeline | 800 |
| query | 805 |
| measurement dataset | 806 |
| measurement sample | 811 |
| measurement sample | 812 |
| template reflection signal | 813 |
| template reflection signal | 814 |
| template reflection signal | 815 |
| template reflection signal | 816 |
| synthesized radar data | 821 |
| pre - processing module | 822 |
| modification module | 825 |
| modification module | 826 |
| combination module | 829 |
| iterations | 901 |
| box | 905 |
| box | 910 |
| box | 911 |
| box | 912 |
| box | 915 |
| box | 920 |
| box | 925 |
| box | 930 |
| box | 935 |

## Claims

1. A computer-implemented method of populating a dataset for training or validating a machine-learning model,
wherein the method comprises:
- obtaining one or more measurement samples (811, 812), each of the one or more measurement samples comprising respective radar data (120, 140, 420) observing a respective scene (170, 171) comprising one or more respective objects (181, 182),
- extracting, as a template reflection signal (131, 813, 814) for a synthesized object (183), a reflection signal component of a selected object from the respective radar data,
- generating synthesized radar data (821) based on a combination of the template reflection signal and at least a part of the radar data of the one or more measurement samples, the synthesized radar data (821) thereby emulating an observation of a synthesized scene (172) comprising at least the synthesized object (183), and
- adding a synthesized sample comprising the synthesized radar data to the dataset.

2. The computer-implemented method of claim 1, wherein the method further comprises:
- altering the template reflection signal to generate the synthesized radar data so as to emulate a predetermined property for the synthesized object.

3. The computer-implemented method of claim 2,
wherein a range position (191, 192) of the template reflection signal is altered, to thereby obtain a predetermined position of the synthesized object in the synthesized scene.

4. The computer-implemented method of claim 2 or 3,
wherein one or more multipath components of the template reflection signal are altered, to thereby obtain at least one of a predetermined radar cross-section of the synthesized object or predetermined multipath characteristics of the synthesized scene.

5. The computer-implemented method of any one of claims 2 to 4,
wherein a signal level of the template reflection signal is altered, to thereby obtain a desired radar cross-section of the synthesized object.

6. The computer-implemented method of any one of claims 2 to 5,
wherein an angular position of the template reflection signal is altered, to thereby obtain a predetermined position of the synthesized object in the synthesized scene.

7. The computer-implemented method of any one of claims 2 to 6,
wherein the one or more measurement samples comprise ground-truth data for the selected object,
wherein the method further comprises:
- determining ground-truth data for the synthesized object based on altering the ground-truth data for the selected object in accordance with said emulating of the predetermined property.

8. The computer-implemented method of any one of claims 2 to 7,
wherein the reflection signal component is extracted based on ground-truth data for the selected object included in the one or more measurement samples and further based on an analysis of a signal level of the respective radar data.

9. The computer-implemented method of any one of the preceding claims,
wherein the synthesized scene comprises the synthesized object and a further object included in the one or more scenes of the one or more measurement samples,
wherein a position of the synthesized object in the synthesized scene is offset from a position of the further object.

10. The computer-implemented method of any one of claims 1 to 9,
wherein the one or more measurement samples comprise a first measurement sample and a second measurement sample,
wherein the reflection signal component of the selected object is extracted from the radar data of the first measurement sample,
wherein the radar data of the second measurement sample observes a scene comprising a further object,
wherein the synthesized radar data is generated based on the combination of the template reflection signal and at least a part of the radar data of the second measurement sample, the synthesized scene thereby comprising the synthesized object and the further object.

11. The computer-implemented method of any one of claims 1 to 9,
wherein the one or more measurement samples comprise a single measurement sample,
wherein the scene of the radar data of the single measurement sample comprises the selected object and a further object,
wherein the synthesized radar data is generated based on the combination of the template reflection signal and at least a part of the radar data of the single measurement sample, the synthesized scene thereby comprising the synthesized object and the further object.

12. The computer-implemented method of claim 10 or 11, wherein the method further comprises:
- altering a range position of the template reflection signal, so that the synthesized object is arranged in front of or behind the further object in the synthesized scene.

13. The computer-implemented method of any one of claims 9 to 12,
wherein the synthesized object is of a first type,
wherein the further object is of a second type,
wherein the first type is human and the second type is moving inanimate object, or vice versa.

14. The computer-implemented method of any one of the preceding claims,
wherein the reflection signal component is extracted from a Doppler spectrogram of a range bin of a range Doppler image of the respective radar data,
wherein the template reflection signal comprises a Doppler spectrogram, wherein the combination algebraically adds values of the Doppler spectrogram of the template reflection signal to another Doppler spectrogram of a range bin of a range Doppler image.

15. A processing device (780), comprising a processor (782) and a memory (783), the processor being configured to load program code from the memory and to execute the program code, wherein the processor, upon executing the program code, is configured to:
- obtain one or more measurement samples, each of the one or more measurement samples comprising respective radar data observing a respective scene comprising one or more respective objects,
- extract, as a template reflection signal for a synthesized object, a reflection signal component of a selected object from the respective radar data,
- generate synthesized radar data based on a combination of the template reflection signal and at least a part of the radar data of the one or more measurement samples, the synthesized radar data thereby emulating an observation of a synthesized scene comprising at least the synthesized object, and
- add a synthesized sample comprising the synthesized radar data to a dataset for training or validating a machine-learning model.
